# FASCICULE DE BREVET EUROPEEN

(11) **EP 3 117 034 B1**
(45) Date de publication et mention de la délivrance du brevet: **03.06.2020**
(21) Numéro de dépôt: 15717539.9
(22) Date de dépôt: 10.03.2015
(51) Int. Cl.: D03D 1/00, D03D 49/20, D03D 13/00, D03D 11/02, B29B 11/16

(54) **PRÉFORME TISSÉE POUR RÉALISER UN RENFORT CIRCONFÉRENTIEL OU TORIQUE À SECTION EN OMEGA**
GEWEBTE PREFORM FÜR EINE RINGFÖRMIGE VERSTÄRKUNG MIT EINEM OMEGA-QUERSCHNITT
WOVEN PREFORM FOR AN ANNULAR REINFORCEMENT WITH AN OMEGA-SHAPED CROSS-SECTION

(30) Priorité: 10.03.2014 FR 1451946
(43) Date de publication de la demande: 18.01.2017
(73) Titulaire: Safran Nacelles, 76700 Gonfreville-l'Orcher (FR)
(72) Inventeur: LORRILLARD, Julien, F-76600 Le Havre (FR); DESJOYEAUX, Bertrand, F-76310 Sainte Adresse (FR); ROGNANT, Michel, F-76600 Le Havre (FR); PROVOST, Benjamin, F-76290 Montivilliers (FR)
(74) Mandataire: Delorme, Nicolas
(86) Numéro de dépôt international: PCT/FR2015/050592
(87) Numéro de publication internationale: WO 2015/136213

(56) Documents cités:
- DE-A1-102008 028 865
- DE-A1-102010 030 550
- US-A- 836 642
- US-A- 962 331
- US-A1- 2013 108 417
- US-A1- 2013 270 389

## Description

La présente invention concerne une préforme sèche tissée pour réaliser un renfort à section en oméga par imprégnation de résine, un raidisseur obtenu avec une telle préforme, et un système de tissage prévu pour réaliser une telle préforme.

Pour réaliser des éléments de structure résistants et légers, en particulier pour le domaine aéronautique, il est connu de préparer une préforme sèche en tissu comprenant par exemple des fibres de carbone, qui est imprégnée d'une résine, en particulier par un procédé d'injection appelé « RTM » (Resin Transfer Molding).

On obtient ainsi, après cuisson pour polymériser la résine, un élément comprenant des fibres dont la densité et l'orientation sont ajustées localement, afin d'obtenir des caractéristiques de résistance mécanique adaptées aux efforts appliqués sur cette pièce.

En particulier on peut réaliser au moyen de cette technique des pièces en forme de peau cintrée autour d'un axe telles que des viroles axisymétriques et comportant au moins un raidisseur circonférentiel donnant de la rigidité à cette peau : une telle peau peut être utilisée notamment dans la fabrication d'une nacelle de moteur d'aéronef.

Dans certains cas, la fonction de raidissage est assurée par un élément disposant d'une section transversale constante formant sensiblement un oméga («Ω»), comprenant une âme (la partie ronde de l'oméga) et une semelle (la base étendue de la section de l'oméga).

Pour la réalisation de l'ensemble formé par la peau cintrée à raidir et le raidisseur en oméga, il est connu de réaliser séparément la peau et le raidisseur qui sont pré-cuits, puis assemblés par une liaison mécanique ou un collage.

Il est connu aussi de réaliser un seul de ces éléments par pré-cuisson, puis de mettre en place la préforme sèche du deuxième élément sur ce premier élément afin de réaliser son imprégnation puis sa cuisson, qui les assemble en même temps.

Il est connu enfin de réaliser deux préformes distinctes, avec une imprégnation et une cuisson simultanées de ces deux préformes mises en position l'une par rapport à l'autre.

Un autre exemple de réalisation est fourni par US2013/0270389, dans lequel on réalise une préforme en oméga avec des plis de textile liés entre eux dans les zones où l'âme et la semelle se rejoignent.

Toutefois ces solutions n'assurent pas une liaison forte entre l'âme et la semelle du raidisseur en oméga, car aucune fibre ne participe à ces liaisons. On a alors une tenue mécanique réduite, avec un risque de décollement par pelage en cas de traction sur l'âme ou sur la semelle du raidisseur.

On peut en variante incorporer le raidisseur à la peau à raidir par des drapages à la main de tissus plans. Cependant cette opération nécessite une main-d'œuvre importante, ce qui entraîne des coûts. De plus il faut de nombreux coupons de tissu, et l'orientation des fibres n'est pas optimisée.

La présente invention a notamment pour but d'éviter ces inconvénients de la technique antérieure.

L'objectif de la présente invention est de constituer une préforme textile particulièrement adaptée au profil de raidisseur en oméga et à la forme cintrée de la peau à raidir.

Elle propose à cet effet une préforme tissée par tissage en forme, présentant une section en oméga comprenant une âme et une semelle, au moins une partie de ladite âme et au moins une partie de ladite semelle comprenant des fils de trame se croisant sur des fils de chaîne communs, remarquable en ce que les fils de trame de ladite âme forment un angle différent de 90° avec au moins une partie des fils de chaîne de ladite âme.

La préforme selon l'invention comporte ainsi une liaison intime entre l'âme et la semelle du raidisseur. Cette liaison tissée permet de contrer les effets de pelage qui ont tendance à désolidariser l'âme de la semelle du raidisseur.

L'intérieur du raidisseur en oméga (volume compris entre l'âme et la semelle) peut être creux ou plein.

Un avantage de cette préforme tissée est que l'on obtient en une seule opération qui peut être facilement industrialisable et rapide, un tissage continu de l'âme et de la semelle de la préforme qui sont ensuite mises en forme sur outillage à la géométrie de la pièce finale incluant le dispositif de maintien en forme de l'âme du raidisseur (outillage à noyau ou à contre-forme et vessie, forme en mousse, etc...), puis imprégnés de résine, afin de constituer après cuisson un ensemble très homogène dont au moins une partie des fils de trame assure une forte liaison entre l'âme et la semelle du raidisseur.

Un autre avantage d'une telle préforme est que le tissage en forme et conjoint de l'ensemble des surfaces prédispose la préforme à s'adapter à la forme pour laquelle elle a été conçue en maitrisant les orientations relatives de fibres.

La préforme tissée selon l'invention peut comporter de plus une ou plusieurs des caractéristiques suivantes, qui peuvent être combinées entre elles :
- les trames de la semelle lient les chaînes des parties latérales de la semelle aux chaînes de la partie centrale de la semelle et les trames de l'âme lient lesdites chaînes des parties latérales de la semelle aux chaînes de la partie centrale de l'âme ;
- certaines trames de la semelle lient une nappe de chaînes des parties latérales de la semelle aux chaînes de la partie centrale de l'âme, et d'autres trames lient une autre nappe de chaînes des parties centrales de la semelle aux chaînes de la partie centrale de l'âme ;
- certaines trames de la semelle lient au moins une nappe de chaînes des parties latérales de la semelle à au moins une nappe de chaînes des parties centrales de la semelle, et d'autres trames lient chacune desdites nappes de chaînes de la semelle aux chaînes de la partie centrale de l'âme ;
- ladite âme comprend superposition de tissus dont les nappes de chaînes sont au moins en partie liées entre elles ;
- ladite semelle comprend une superposition de tissus dont les nappes de chaînes sont au moins en partie liées entre elles ;
- ladite âme comprend une superposition de tissus rapportés les uns sur les autres par emboîtement de tissus de forme correspondante ;
- ladite semelle est formée de deux parties séparées l'une de l'autre ;
- lesdites deux parties se recouvrent partiellement ;
- lesdites deux parties sont séparées l'une de l'autre de manière à définir une fente ;
- ladite âme se trouve dans la concavité de ladite préforme ;
- ladite âme se trouve sur la partie convexe de ladite préforme ;
- les fils de trame de ladite âme forment un angle différent de 90° avec au moins une partie des fils de chaîne de ladite âme ;
- ladite semelle ou ladite âme, ou les deux, comprend en outre une superposition de tissus rapportés les uns sur les autres par drapage ;
- certains au moins des éléments de tissus et de la préforme sont liés par des coutures ;
- différentes parties de préformes et de plis additionnels peuvent être cousus entre eux afin de renforcer leur cohésion.

La présente invention se rapporte également à un raidisseur, remarquable en ce qu'il est obtenu par imprégnation de résine, puis cuisson d'une préforme conforme à ce qui précède.

La présente invention se rapporte également à un procédé de fabrication d'une préforme conforme à ce qui précède, remarquable en ce qu'on réalise cette préforme par tissage contour sur un mandrin d'enroulement présentant une gorge ou une excroissance (selon la face concave ou convexe de la virole sur laquelle s'appuie le raidisseur), avec un élément spécifique indépendant permettant de tisser en forme l'âme et semelle de la préforme.

Suivant d'autres caractéristiques optionnelles de ce procédé :
- on serre les côtés de ladite préforme afin de réduire la largeur de cette préforme tissée sensiblement cylindriquement, tout en augmentant le diamètre d'enroulement de ladite âme et de ladite semelle ;
- on coupe ladite semelle en sortie du métier à tisser pour former ladite fente centrale ;
- on réalise ladite semelle par au moins deux nappes de chaînes latérales supplémentaires déliées des fils de trame de l'âme de la préforme, puis on déplie ces parties latérales vers le centre de la préforme.

La présente invention se rapporte également à une forme axisymétrique notamment pour nacelle d'aéronef, remarquable en ce qu'elle est renforcée par au moins un raidisseur conforme à ce qui précède.

L'invention sera mieux comprise et d'autres caractéristiques et avantages apparaîtront plus clairement à la lecture de la description ci-après donnée à titre d'exemple, en référence aux dessins annexés dans lesquels :
- les figures 1a et 1b sont des vues d'ensemble et de détail d'un raidisseur obtenu avec une préforme tissée selon l'invention ;
- les figures 2a et 2b sont des schémas d'organisation des fils d'un premier mode de tissage de cette préforme, comportant à la sortie de ce tissage une semelle formée d'une seul tenant, la figure 2a montrant en perspective la répartition des nappes de fils, et la figure 2b présentant en section un arrangement d'entrelacement de fils perpendiculaires entre eux ;
- la figure 3 présente une vue en perspective de la préforme s'enroulant sur une forme axisymétrique caractéristique du tissage en forme ;
- la figure 4 présente la découpe de la semelle en deux parties ;
- les figures 5a, 5b et 6a, 6b présentent un procédé de création de forme de la préforme associée au tissage, comprenant respectivement les vues de côté de l'ensemble, et les vues du mandrin de mise en forme pour des raidisseurs en face concave ou en face convexe de surface axisymétrique ;
- la figure 7 est un schéma en coupe du tissage de la préforme, selon une variante du premier mode de réalisation ;
- la figure 8 représente en perspective un deuxième mode de tissage de la préforme ;
- les figures 8a à 8c, et 8d à 8f présentent des étapes successives de mise en forme de cette préforme ;
- la figure 9a est un schéma en coupe du tissage de la préforme, selon une variante du deuxième mode de réalisation ;
- les figures 9b et 9c présentent en coupe transversale deux étapes successives de mise en forme ultérieure du tissage de cette variante ;
- la figure 10a et 10b montrent un schéma en coupe du tissage de la préforme, selon une autre variante du deuxième mode de réalisation et son déploiement ;
- la figure 11 a et 11b présentent un schéma en coupe du tissage de la préforme, selon un troisième mode de réalisation et son déploiement ;
- les figures 12 à 14 sont des schémas en coupe transversale de tissages selon d'autres variantes.

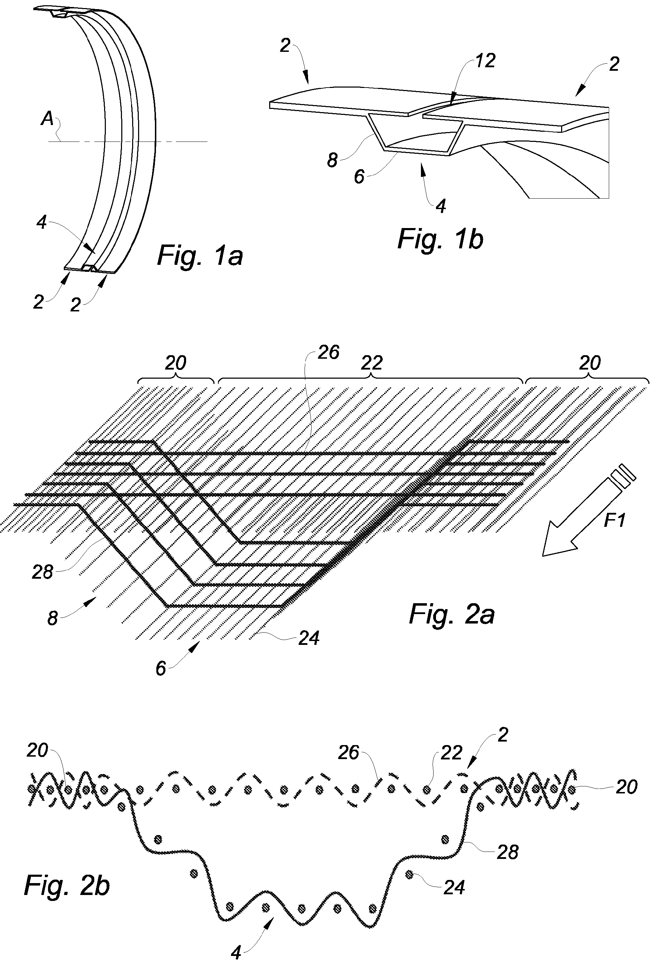

Les figures 1a et 1b représentent un raidisseur à section en oméga selon l'invention, destiné à être fixé à l'intérieur (c'est-à-dire en face concave) d'une peau à raidir (non représentée) cintrée autour d'un axe, tel qu'une portion de virole axisymétrique ou une virole entière.

Dans l'exemple représenté, ce raidisseur présente une fente 12 disposée dans un plan perpendiculaire à l'axe A de cintrage, qui sépare deux parties de semelle 2 reliées entre elles par l'âme 4 du raidisseur.

Comme cela est visible notamment sur la figure 1b, l'âme 4 du raidisseur présente sensiblement une section en U, comprenant un fond 6 et deux ailes inclinées 8.

Les figures 2a et 2b présentent en vues rabattue linéaire et en section transversale un exemple de mode de tissage de la préforme permettant de réaliser le raidisseur des figures 1a et 1b, qui est tissée en continu avec une avance indiquée par la flèche F1.

La figure 2a montre le schéma d'organisation des nappes de fils. Le tissage comporte différentes nappes de fils de chaîne comprenant dans le plan de la semelle 2, deux parties latérales comprenant des fils de chaîne communs 20 pour les fils de trame 26 de la semelle 2 de la préforme et pour les fils de trame 28 de l'âme 4 de la préforme.

La figure 2b montre un exemple d'entrelacement de tissage entre fils de chaîne et fils de trame selon un motif de type taffetas ou toile.

Dans la partie centrale de la préforme, les fils de chaîne 22 de la semelle 2 et les fils de chaîne 24 de l'âme 4, forment deux nappes de tissus distinctes avec les fils de trames respectifs 26 et 28.

On obtient une préforme dont les parties latérales de semelle 2 sont fortement liées à l'âme 4 par les croisements des deux séries de fils de trame 26, 28 avec les fils de chaîne 20 de ces parties latérales.

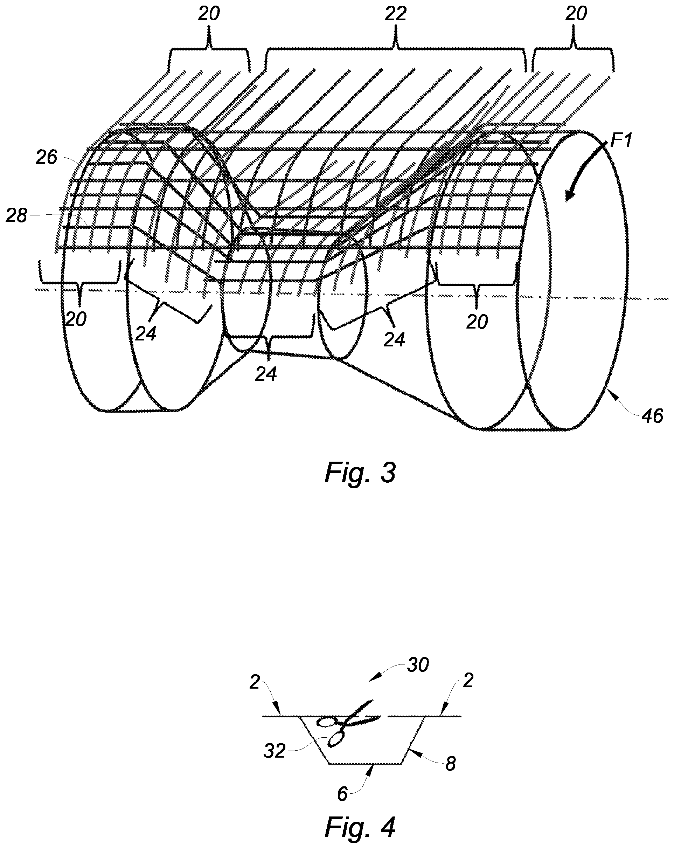

La figure 3 montre la vue en forme de la préforme avec les différents groupes de fils. Le mandrin de révolution 46 représenté illustre la forme générale de la préforme.

La préforme est tissée par tissage en forme.

Plus particulièrement, la préforme est tissée par tissage en forme autour d'une pièce de révolution.

On entend par tissage en forme un tissage réalisé sur une pièce de révolution de génératrice non linéaire, ici le mandrin 46. Ce type de tissage en forme permet notamment d'obtenir des fils circonférentiels de longueurs différentes, ici des fils de chaîne.

La figure 4 présente une étape suivante qui réalise en continu avec un outil de coupe 32 une coupe 31 des fils 26 de la partie centrale de la semelle, afin de former la fente 12.

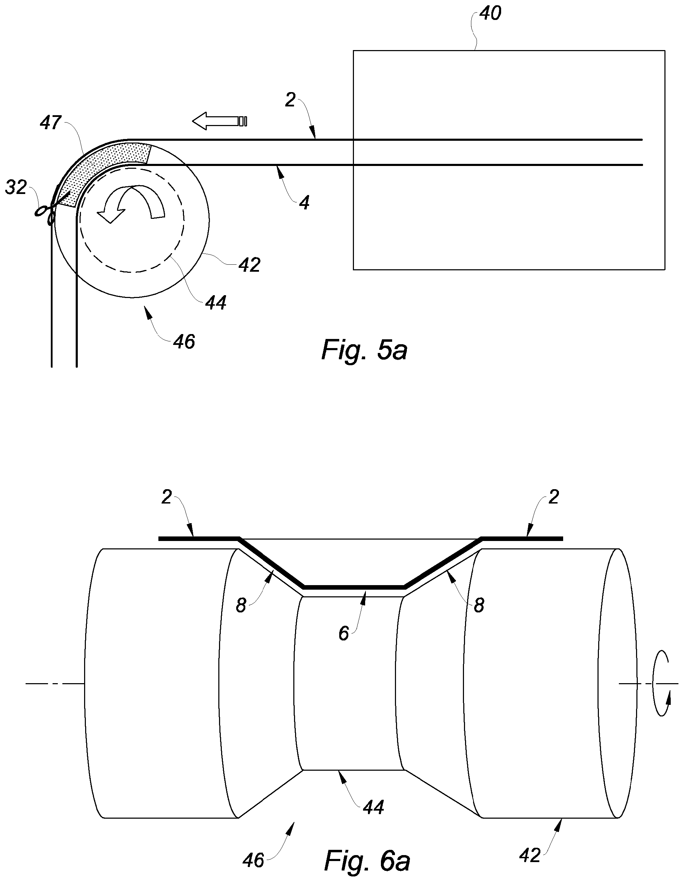

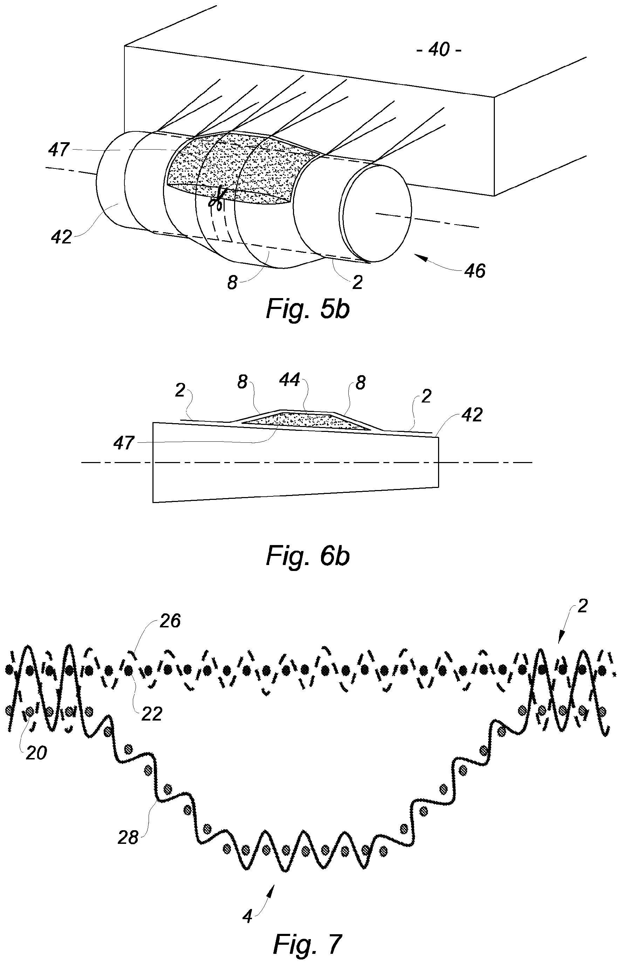

Les figures 5a (respectivement 5b) et 6a (respectivement 6b) présentent un métier à tisser 40 qui produit en continu la préforme, venant s'enrouler autour d'un mandrin 46 comprenant une gorge circulaire centrale 44 disposant d'un profil permettant de réaliser l'âme 4 de la préforme et un secteur additionnel 47 pour former la partie centrale de la semelle 2 au-dessus de l'âme 4, (respectivement un mandrin 46 permettant de former la semelle 2 et un secteur additionnel 47 pour former l'âme du raidisseur).

Le tissage ainsi réalisé en forme confère à la préforme une prédisposition à s'adapter à une forme axisymétrique telle qu'une virole avec un raidisseur circonférentiel dit en oméga, sans plissures ni distorsions ou glissements des fils.

En pratique, il est difficile de tisser une préforme de ce type en une seule fois si les ailes 8 de l'âme forment un angle trop important avec le fond 6 ou avec les parties latérales de la semelle 2.

En pratique, il est souhaitable que cet angle ne dépasse pas 30°, voire si possible ne dépasse pas 15°. Lorsque le diamètre de la virole pour laquelle est destinée la préforme est important, ou que les angles des ailes 8 de l'âme du raidisseur oméga sont trop importants par rapport à la semelle 2, le profil du mandrin 46 n'est pas celui de la pièce, mais il en est une sorte de similitude, comme cela est connu dans le domaine du tissage en forme, également connu sous l'appellation « tissage contour » (ou « contour weaving » en terminologie anglo-saxonne) : les longueurs des segments de section du mandrin 46, sont les mêmes que sur la préforme du raidisseur déployé sur la pièce à mouler, et pour chaque point de tous ces segments le rapport entre le rayon sur la pièce à mouler et le rayon du mandrin est constant.

Une telle technique de tissage permet de réaliser des préformes gauches, c'est-à-dire des éléments tissés tridimensionnels ayant une courbure dans l'espace.

On a en particulier sur le mandrin 46 un fond de gorge 44 cylindrique dans lequel s'ajuste le fond 6 de l'âme de la préforme, comprenant deux flancs inclinés dans lesquels s'ajustent les ailes inclinées 8 de cette âme, cette gorge étant encadrée par deux noyaux cylindriques 42 recevant la semelle 2 du raidisseur. Le mandrin 46 et l'élément additionnel 47 réalisent ainsi la mise en forme du tissage de la préforme sortant du métier à tisser 40.

L'élément 47 doit couvrir un secteur angulaire de mandrin minimum pour assurer l'appel des fils de chaîne selon le diamètre approprié à sa forme extérieure, pour que le tissage qu'il supporte ait la forme définie. Préférentiellement il couvrira au moins 30° d'angle. Préférentiellement il couvrira au moins 45° d'angle. Et préférentiellement encore il pourra atteindre au moins 80° d'angle.

Au fur et à mesure de la production du tissage de la préforme, celle-ci doit se déplacer par rapport à cet élément 47. Pour ce faire, on pourra conserver l'élément immobile par rapport au métier, la préforme ne faisant que glisser sur la surface extérieure de l'élément au fur et à mesure de la rotation du mandrin 46. Dans un autre mode de réalisation du métier, l'élément 47 aura un mouvement en rotation séquentiel et alternatif, tantôt tournant avec le mandrin 46, tantôt effectuant une rotation de valeur angulaire inverse pour le ramener à sa position initiale.

On choisira la longueur du segment 47 en fonction de la densité de tissage ou d'entrelacement entre les nappes de chaînes de l'âme et de la semelle par les nappes de trames pour que la forme de la préforme soit stabilisée au-delà de l'élément 47. Particulièrement dans le cas des textiles pour applications structurales aéronautiques, les mèches de fibres tissées (souvent fibres de carbone et/ou fibres de verre, ou fibres céramiques) ont des largeurs allant de quelques dixièmes de millimètres à quelques millimètres, on trouve ainsi des densités de fibres de l'ordre de 2 à 10 fibres par cm. Une longueur de 5 à 10 cm de préforme tissée procure suffisamment d'entrelacement entre fibres pour donner une bonne stabilité de tissage.

Un élément 47 dont le périmètre le long duquel les fils de chaînes sont maintenus d'au moins quelques centimètres répond alors à l'objectif de stabilisation de la forme de préforme avant relâchement de la forme 47 et d'éventuel écartement du mandrin 46.

L'outil de coupe 32 est disposé en sortie du mandrin 46, afin de réaliser en continu la coupe de la partie centrale de la semelle pour former la fente 12.

La figure 7 présente une autre variante de tissage, qui diffère de celle de la figure 1 en ceci que la nappe de fils de chaîne 22 définissant la semelle 2, se superpose aux parties latérales 20 de la nappe de fils de chaîne 20, 24 dont la partie centrale 24 définit l'âme de la préforme.

Les fils de trame 26 et 28 croisent quant à eux à la fois les parties latérales de la nappe 26 et de la nappe 20, 24 : on obtient de la sorte une très bonne cohésion entre la semelle 2 et l'âme 4 de la préforme, et on augmente la quantité de fibres de chaîne dans ces zones.

On notera que les formes de section de révolution de virole, respectivement de raidisseurs, sont données à titre d'exemple et ne sont pas nécessairement droite respectivement trapézoïdale, mais peuvent avoir des formes curvilignes. Par exemple le mandrin 46 représenté à la figure 6b, a une forme conique correspondant à une virole de forme conique à draper avec la préforme tissée selon l'invention. Il pourrait avoir une forme en tonneau également. De même la forme de l'âme 4 proposée en U évasé, peut avoir une forme ondulée.

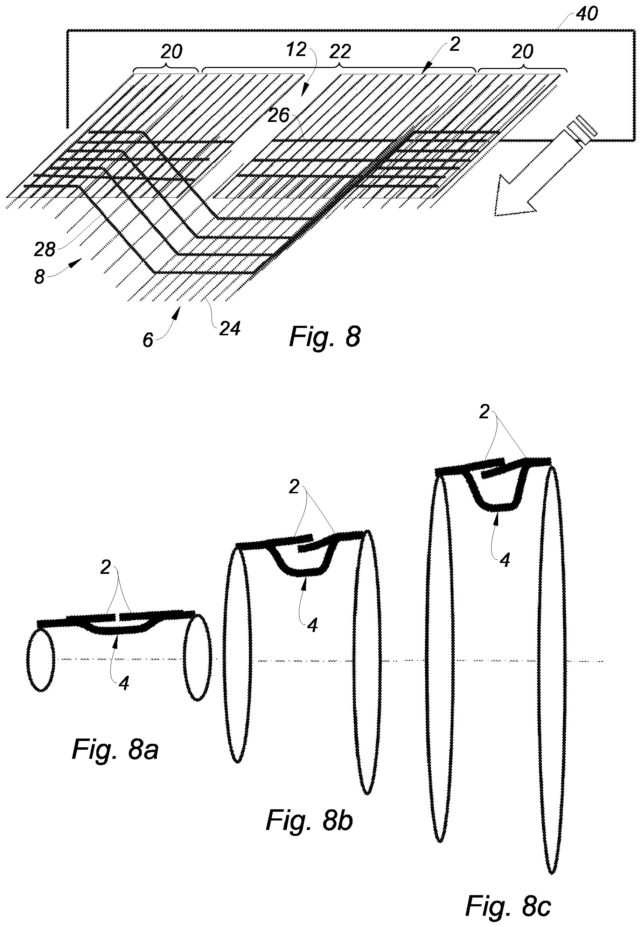

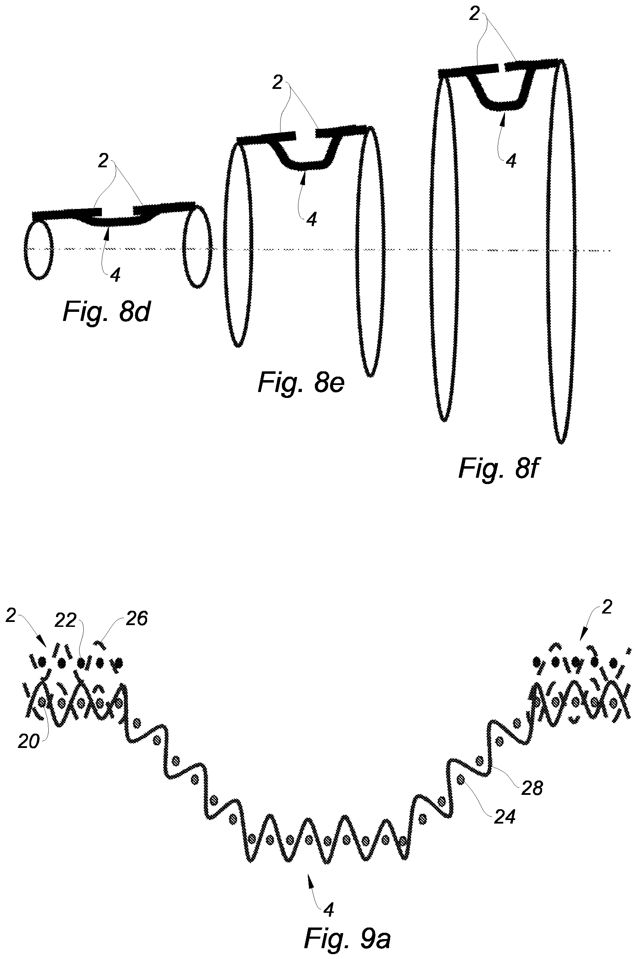

La figure 8 présente le schéma d'organisation d'un deuxième mode de réalisation d'un tissage comportant une semelle 2 qui est produite en deux parties afin de former directement la fente centrale 12 lors de ce tissage. Au niveau de la fente 12, la semelle 2 ne comporte pas de fils de chaîne, et les fils de trame 26 de la semelle 2 sont insérés séparément pour tisser séparément chacune des parties de semelle, afin d'obtenir une fente déjà formée. On évite ainsi la mise en place de l'outil 32.

Dans l'application la plus commune de l'invention, la préforme est destinée à une virole d'un diamètre plus important que le mandrin 46. Les figures 8a à 8c montrent la transformation de forme du raidisseur au fur et à mesure de l'extension de diamètre d'enroulement de la semelle de la préforme depuis ceux vus sur le mandrin (figure 8a) à ceux attendus sur la pièce à mouler (figure 8c).

L'adaptation d'une forme à l'autre répond aux règles de respect de ratio des diamètres respectifs en tout point d'une section de la préforme et de conservation de longueur de segments transverses. L'augmentation de diamètre d'enroulement a pour conséquence le redressement des ailes 8 de l'âme et l'augmentation des angles entre les ailes 8 et le fond 6 ou les parties de semelle.

Dans le cas des figures 8a à 8c, la fente initiale entre les deux parties de semelle est étroite lors du tissage de la préforme, ce qui entraine, lorsque l'on déploie la préforme, un recouvrement des deux parties centrales de la semelle 2.

Les figures 8d à 8f montrent une variante pour laquelle la fente réalisée lors du tissage est plus large, les parties centrales de la semelle ne se recouvrent pas lorsque l'on augmente le diamètre de la préforme.

Lorsque que la forme de virole supportant le raidisseur est sensiblement cylindrique, les diamètres d'enroulement de l'ensemble des fils de chaîne 20 et 22 sont sensiblement identiques. On peut alors également réaliser la préforme selon l'invention selon d'autres modes de réalisation permettant d'éviter le recours à l'élément séparé 47 associé au mandrin 46, et ne nécessiter qu'un mandrin 46, de la forme adaptée.

Les figures 9a à 9c présentent une autre variante du même mode de tissage de la préforme dans lequel la semelle 2 est réalisée en deux bandes séparées pour former la fente centrale 12.

Dans cette variante, la nappe de fils de chaîne 22 est séparée en deux parties, chacune d'elle étant superposée avec les nappes de fils de chaîne 20 sur chacune des parties latérales.

Comme dans le premier mode de réalisation, un premier fil de trame 28 croise tous les fils de la nappe 20, 24 pour relier l'âme du raidisseur et les parties latérales de semelle. Les fils de trame 26, selon un premier parcours transversal, sont tissés avec les fils de chaîne 20 latéraux, et dans un second parcours transversal vers l'extérieur, sont tissés avec les fils de chaînes 22 superposés.

La semelle 2 est ainsi formée en deux parties repliées chacune sur elle-même.

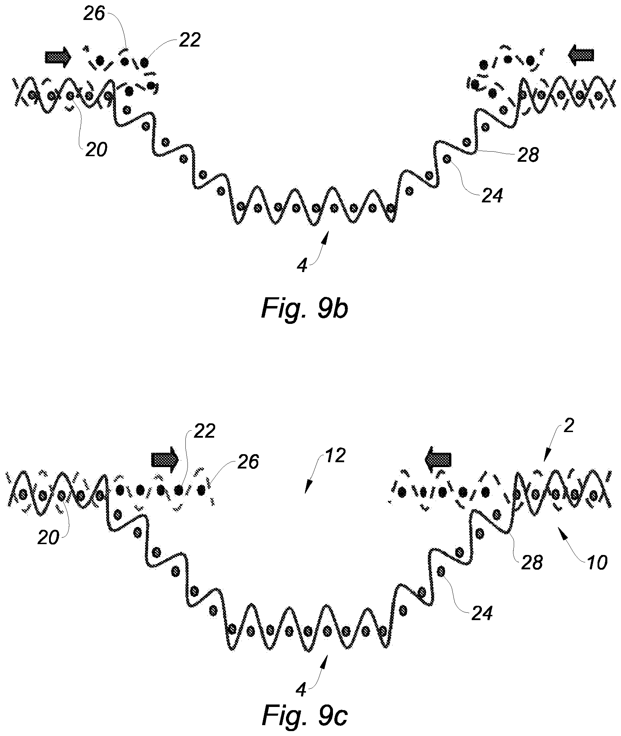

Les figures 9b et 9c présentent le déploiement de ces deux parties de la semelle 2, en repoussant chacune de ces deux parties vers le centre comme indiqué par les flèches.

La figure 9c présente ces deux parties de la semelle 2 complètement déployées, qui forment ainsi cette semelle devenue plane, comprenant la fente centrale 12. On a, de la même manière que dans les variantes précédentes, une très bonne cohésion entre la semelle 2 et l'âme 4 de la préforme du raidisseur.

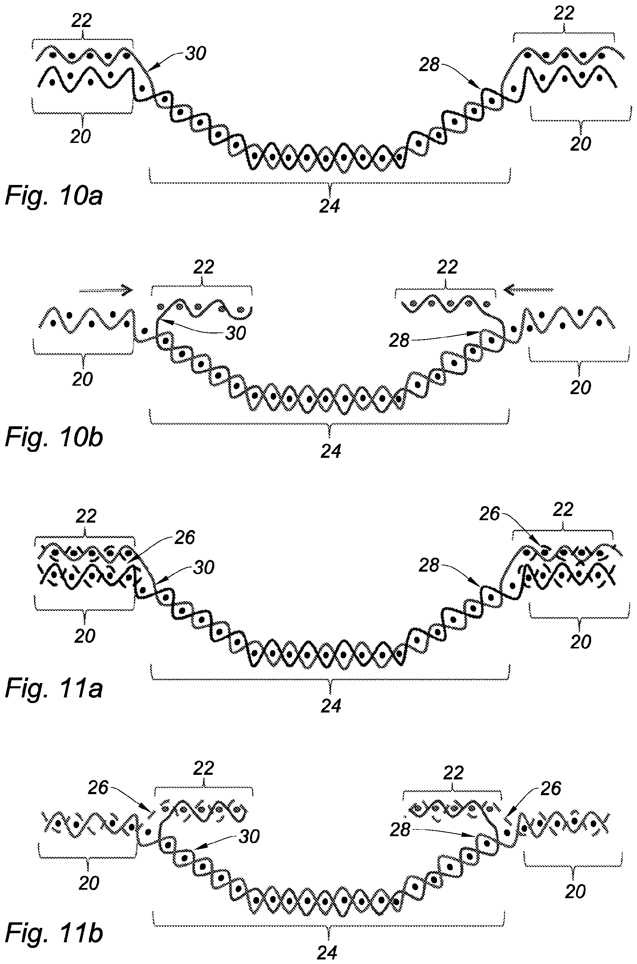

La figure 10a montre un troisième mode de réalisation de préforme selon l'invention selon lequel les nappes de fils de chaîne 22 sont réparties superposées sur les nappes de fils de chaîne 20, et les fils de trame 28 de l'âme sont tissés avec les fils de chaîne 20, et d'autres fils de trame 30 de l'âme sont tissés d'autre part avec les fils de chaîne 22. Seul un fil de trame 28, respectivement 30 est représenté sur la figure 10a, mais bien entendu selon différentes colonnes de trame, par tout motif de tissage connu de l'homme de métier, on pourra assurer la liaison de l'ensemble des fils de chaîne de chaque nappe avec l'ensemble des fils de trame associés.

Comme dans la variante des figures 9a à 9c, on procède ensuite par retournement des parties tissées avec les nappes de fils 22, pour former la partie centrale de la semelle du raidisseur, comme il est montré à la figure 10b. Dans ce cas les fibres de trame de l'âme 28 et 30 lient les deux parties des semelles avec les fils de chaînes 20 et 22.

La figure 11a présente un autre mode de réalisation de préforme selon l'invention dans lequel les fils de trame lient, par groupes de deux, les trois parties de section de préforme. La section de l'oméga est constituée de trois parties : l'âme 4 couverte par les couches de chaîne 24, les parties extérieures de semelle couvertes par les nappes de chaîne 20, et les parties centrales de semelle couvertes par les nappes de chaîne 22.

Comme dans la variante de la figure 9a, les fils de trame 26 lient les fils de chaîne 20 et les fils de chaîne 22 selon un mode de tissage par navette du fil de trame en retour à l'extrémité des nappes 20 et 22 proche de l'âme 4.

Comme dans le mode de réalisation de la figure 10a, d'autres fils de trame 30 lient les nappes de fils de chaîne 24 de l'âme 4 et les nappes de fils de chaîne 22, d'une part, et d'autres fils de trame 28 lient les nappes de fils de chaine 24 de la l'âme 4, et les nappes de fils de chaînes 22 de la partie centrale de la semelle 2.

On obtient ainsi un ensemble lié extrêmement cohérent entre les différentes parties du raidisseur. Comme dans la variante des figures 9a à 9c on obtient la remise en forme de la semelle 2 par retournement des parties tissées liant les nappes de chaîne 22 comme il est montré à la figure 11b.

Les exemples d'entrelacements entre fils de trames et fils de chaînes sont donnés à titre indicatifs dans les figures précédentes. L'homme de métier pourra envisager des tissages selon différents motifs possibles connus, tels que taffetas sergés ou satins. Une attention pourra être apportée au motif au voisinage du raccordement entre l'âme et la semelle, notamment en préférant des motifs dans lesquels les parcours des trames sont équilibrés dans l'épaisseur, afin de limiter d'éventuelles sur longueurs ou sur tension des fils de trames, notamment dans les variantes nécessitant le retournement des tissages de la partie centrale de semelle.

Le procédé selon l'invention permet de réaliser des préformes dont les fils de trame présentent sur tout ou partie de la largeur de la préforme une certaine orientation par rapport aux fils de chaîne différente de 90° (par exemple 45°).

Pour cela, on considère différentes étapes entre le tissage en forme et la forme finale de la pièce comportant ces trames inclinées selon un angle différent de 90° par rapport aux fils de chaîne.

La première étape consiste à faire pivoter les fils de trames inclinés pour les ramener à 90° par rapport aux fils de chaîne, tout en conservant la longueur de fils de trame entre deux chaînes, ainsi les sections des différentes colonnes de chaînes se trouvent alors plus espacées d'un facteur 1/cos(angle initial à angle 90°) x la distance initiale.

A cette nouvelle forme dilatée transversalement, on applique ensuite si nécessaire la transformation des diamètres de mandrins des différentes colonnes de chaînes selon les règles adaptées au tissage en forme, ou bien un facteur unique de réduction de l'ensemble des diamètres de la forme, et une augmentation de l'espacement entre les différents diamètres de sorte que chaque longueur de trame nécessaire à relier ces différents diamètres porteurs de colonnes de chaîne reste identique à celle sur la forme finale.

Après tissage, le déploiement et le décadrage ou cisaillement d'angles de fils de trames par rapport au fils de chaînes dans les zones considérées, rapporté à l'application à la forme de pièce voulue, reproduiront alors l'angle voulu.

D'autres variantes complémentaires de mode de réalisation de la préforme peuvent s'ajouter optionnellement aux précédentes, notamment pour obtenir une préforme plus épaisse dans certaines zones tout en produisant une préforme en une seule fois.

On peut disposer de plusieurs couches de nappes de fils de chaînes 24 dans la zone de l'âme 4 qui sont alors liées par une à plusieurs couches de fils de trames 28 ou 30 selon par exemple un mode de tissage multicouches de type couche à couche ou multicouches interlock.

On peut disposer plusieurs couches de nappes de fils de chaîne 20 dans l'une ou les deux parties latérales de la semelle 2, liées par une à plusieurs couches de fils de trame 28, 30 ou 26.

On peut disposer plusieurs couches de nappes de fils de chaîne 22 dans l'une ou les deux parties centrale de la semelle 2, liées par une ou plusieurs couches de fils de trame 26.

Le tissage en multicouche confère alors à ladite zone encore plus de liaison entre les fibres et permet de produire en une seule fois la préforme réduisant le nombre de tissus à disposer dans la forme de moulage pour réaliser la pièce.

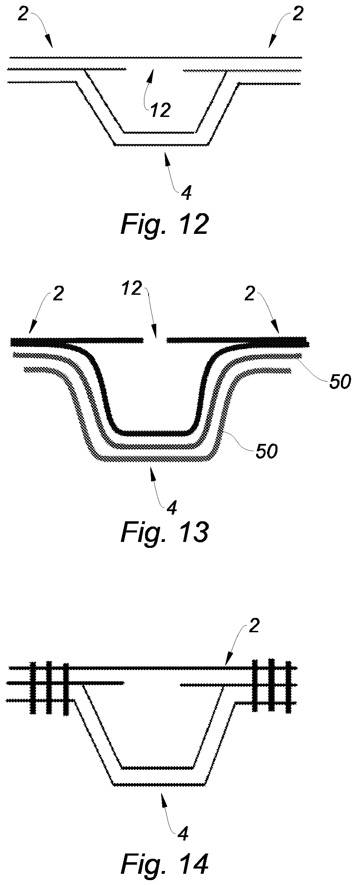

En fonction des sollicitations auxquelles est soumise la pièce, il peut être utile de compléter le drapage de la forme par adjonction à la préforme selon l'une des différentes variantes précédentes ou combinaison de plusieurs de ces variantes de couches successives. A titre non limitatif d'exemples, les figures 12 à 14 montrent des préformes de raidisseurs obtenues en combinant les préformes selon l'invention avec d'autres techniques.

La figure 12 présente un schéma de section d'un exemple de préforme pouvant être obtenue par exemple en partant de la préforme obtenue selon l'un quelconque des procédés précédents, sur la semelle de laquelle on superpose des plis de tissu par tout procédé classique, ou par un procédé de tissage en forme, tel qu'un procédé de drapage.

La figure 13 présente une variante dans laquelle on réalise une préforme selon l'un quelconque des procédés précédents, puis on rapporte sur cette préforme par emboîtement d'autres préformes 50 également réalisées par tissage contour, pouvant éventuellement présenter des orientations de fils de trame différentes (par exemple à +/- 45°), afin d'offrir une résistance optimale aux efforts auxquels sera finalement soumis le raidisseur.

A noter que l'on peut envisager de combiner les procédés des figures 12 et 13.

La figure 14 présente une variante des préceptes selon les figures 12 ou 13 selon laquelle après avoir assemblé un certain nombre de tissus complémentaire avec une préforme selon l'invention, on effectue des liaisons entre ces différents éléments par des coutures tel que par exemple selon des procédés de « tufting » (touffetage), ou « stitching » (piquage, couture).

Plus généralement, il faut comprendre que l'invention s'étend à toutes les combinaisons des variantes précédemment exposées : on peut ainsi envisager un nombre quelconque de couches de tissus dont les chaînes sont liées entre elles au moins en partie dans les parties latérales de la préforme, voire éventuellement dans l'âme de la préforme, combinées à un nombre quelconque de couches de tissu rapportées par drapage, couture ou emboîtement (dans le cas d'un tissu lui-même obtenu par tissage contour).

On notera également que, dans ce qui précède, on s'est attaché à décrire une préforme adaptée à un raidisseur destiné à être placé dans la concavité d'une pièce cintrée à renforcer. Les mêmes variantes peuvent s'appliquer également pour un raidisseur disposé en excroissance de la face convexe d'une pièce cintrée à renforcer.

D'une manière générale, la présente invention permet ainsi de réaliser de manière simple et efficace, avec un procédé industriel de tissage contour bien connu en soi, une préforme comprenant une bonne liaison entre sa semelle et son âme, permettant ainsi de prévenir tout phénomène de pelage.

De plus ce procédé peut être réalisé de manière automatique, avec des coûts réduits et une bonne répétabilité du résultat obtenu.

Ce procédé est particulièrement adapté pour réaliser des raidisseurs pour des pièces cintrées de nacelles de turboréacteurs destinées à des aéronefs.

Notamment, des raidisseurs circonférentiels en face concave sont particulièrement adaptés à renforcer des éléments de nacelles tels que des viroles externes d'entrée d'air, des capots externes de nacelles, des capots externes d'inverseurs à grilles ou des éléments externes de viroles et de portes d'inverseurs à portes. Ils peuvent également servir pour des panneaux ou viroles cintrés d'aéronefs tels que des éléments de fuselage, des éléments de portes de fuselage.

Des raidisseurs en face convexe sont particulièrement adaptés à renforcer des éléments axysimétriques d'ensemble propulsifs tels que des viroles internes d'entrée d'air, des carters fan de turboréacteurs, des carter intermédiaires ou arrière de turboréacteur et plus généralement des carters axisymétriques

## Revendications

1. Préforme tissée par tissage en forme, présentant une section en oméga comprenant une âme (4) et une semelle (2), au moins une partie de ladite âme (4) et au moins une partie de ladite semelle (2) comprenant des fils de trame (26, 28, 30) se croisant sur des fils de chaîne communs (20),
**caractérisée en ce que** les fils de trame (26, 28, 30) de ladite âme (4) forment un angle différent de 90° avec au moins une partie des fils de chaîne (20, 24) de ladite âme (4).

2. Préforme selon la revendication 1, **caractérisée en ce que** les trames (26) de la semelle (2) lient les chaînes (20) des parties latérales de la semelle aux chaînes (22) de la partie centrale de la semelle (2) et **en ce que** les trames de l'âme (28) lient lesdites chaînes (20) des parties latérales de la semelle (2) aux chaînes (24) de la partie centrale de l'âme (4).

3. Préforme selon la revendication 1, **caractérisée en ce que** certaines trames (30) de la semelle (2) lient une nappe de chaînes des parties latérales de la semelle (2) aux chaînes (24) de la partie centrale de l'âme (4), et **en ce que** d'autres trames (28) lient une autre nappe de chaînes (20) des parties latérales de la semelle (2) aux chaînes (24) de la partie centrale de l'âme (4).

4. Préforme selon la revendication 1, **caractérisée en ce que** certaines trames (26) de la semelle (2) lient au moins une nappe de chaînes (20) des parties latérales de la semelle (2) à au moins une nappe de chaînes (22) des parties centrales de la semelle (2), et **en ce que** d'autres trames (28, 30) lient les nappes de chaînes de la semelle (20, 22) aux chaînes (24) de la partie centrale de l'âme (4).

5. Préforme selon l'une quelconque des revendications précédentes, **caractérisée en ce que** ladite âme (4) comprend une superposition de tissus dont les nappes de chaînes sont au moins en partie liées entre elles.

6. Préforme selon l'une quelconque des revendications précédentes, **caractérisée en ce que** ladite semelle (2) comprend une superposition de tissus dont les nappes de chaînes (20, 22) sont au moins en partie liées entre elles.

7. Préforme selon l'une quelconque des revendications précédentes, **caractérisée en ce que** ladite âme (4) comprend une superposition de tissus rapportés les uns sur les autres par emboîtement de tissus (50) de forme correspondante.

8. Préforme selon l'une quelconque des revendications précédentes, **caractérisée en ce que** ladite semelle (2) est formée de deux parties séparées l'une de l'autre.

9. Préforme selon la revendication 8, **caractérisée en ce que** lesdites deux parties se recouvrent partiellement.

10. Préforme selon la revendication 8, **caractérisée en ce que** lesdites deux parties sont séparées l'une de l'autre de manière à définir une fente (12).

11. Préforme selon l'une quelconque des revendications précédentes, **caractérisée en ce que** ladite âme (4) se trouve dans la concavité de ladite préforme.

12. Préforme selon l'une quelconque des revendications 1 à 10, **caractérisée en ce que** ladite âme (4) se trouve sur la partie convexe de ladite préforme.

13. Préforme selon l'une quelconque des revendications précédentes, **caractérisée en ce que** ladite semelle (2) ou ladite âme (4), ou les deux, comprend en outre une superposition de tissus rapportés les uns sur les autres par drapage.

14. Préforme selon la revendication 13, **caractérisée en ce que** certains au moins des éléments de tissus et de la préforme sont liés par des coutures.

15. Raidisseur, **caractérisé en ce qu'**il est obtenu par imprégnation de résine, puis cuisson, d'une préforme conforme à l'une quelconque des revendications précédentes.

16. Procédé de fabrication d'une préforme conforme à l'une quelconque des revendications 1 à 14, **caractérisé en ce qu'**on réalise cette préforme par tissage contour sur un mandrin d'enroulement (46) présentant une gorge (44) ou une excroissance permettant de tisser en forme l'âme (4) et la semelle (2) de la préforme.

17. Procédé de fabrication selon la revendication 16, **caractérisé en ce qu'**on serre les côtés (8) de ladite préforme afin de réduire la largeur de cette préforme tissée sensiblement cylindriquement, tout en augmentant le diamètre d'enroulement de ladite âme (4) et de ladite semelle (2).

18. Procédé de fabrication selon l'une des revendications 16 ou 17 pour la réalisation d'une préforme conforme à la revendication 10, **caractérisé en ce qu'**on coupe ladite semelle (2) en sortie du métier à tisser pour former ladite fente centrale (12).

19. Procédé de fabrication selon l'une des revendications 16 ou 17 pour la réalisation d'une préforme conforme à la revendication 8, **caractérisé en ce qu'**on réalise ladite semelle (2) par au moins deux nappes de chaînes latérales supplémentaires (22) déliées des fils de trame (28) de l'âme (4) de la préforme, puis **en ce qu'**on déplie ces parties latérales vers le centre de la préforme.

20. Plaque notamment pour nacelle d'aéronef, **caractérisée en ce qu'**elle est renforcée par au moins un raidisseur conforme à la revendication 15.

## Patentansprüche

1. Gewebte Vorform durch Formweben, aufweisend einen omegaförmigen Querschnitt, umfassend eine Seele (4) und eine Sohle (2), wobei mindestens ein Teil der Seele (4) und mindestens ein Teil der Sohle (2) Schussfäden (26, 28, 30) umfasst, die sich auf den gemeinsamen Kettfäden (20) kreuzen,
**dadurch gekennzeichnet, dass** die Schussfäden (26, 28, 30) der Seele (4) einen Winkel, der sich von 90° unterscheidet, mit mindestens einem Teil der Kettfäden (20, 24) der Seele (4) bilden.

2. Vorform nach Anspruch 1, **dadurch gekennzeichnet, dass** die Schüsse (26) der Sohle (2) die Ketten (20) der seitlichen Teile der Sohle mit den Ketten (22) des zentralen Teils der Sohle (2) verbinden und dass die Schüsse der Seele (28) die Ketten (20) der seitlichen Teile der Sohle (2) mit den Ketten (24) des zentralen Teils der Seele (4) verbinden.

3. Vorform nach Anspruch 1, **dadurch gekennzeichnet, dass** einige Schüsse (30) der Sohle (2) eine Kettschar der seitlichen Teile der Sohle (2) mit den Ketten (24) des zentralen Teils der Seele (4) verbinden und dass andere Schüsse (28) eine andere Kettschar (20) der seitlichen Teile der Sohle (2) mit den Ketten (24) des zentralen Teils der Seele (4) verbinden.

4. Vorform nach Anspruch 1, **dadurch gekennzeichnet, dass** einige Schüsse (26) der Sohle (2) mindestens eine Kettschar (20) der seitlichen Teile der Sohle (2) mit mindestens einer Kettschar (22) der zentralen Teile der Sohle (2) verbinden und dass andere Schüsse (28, 30) die Kettscharen der Sohle (20, 22) mit den Ketten (24) des zentralen Teils der Seele (4) verbinden.

5. Vorform nach einem der vorangehenden Ansprüche, **dadurch gekennzeichnet, dass** die Seele (4) eine Übereinanderlagerung von Geweben umfasst, deren Kettscharen mindestens teilweise miteinander verbunden sind.

6. Vorform nach einem der vorangehenden Ansprüche, **dadurch gekennzeichnet, dass** die Sohle (2) eine Übereinanderlagerung von Geweben umfasst, deren Kettscharen (20, 22) mindestens teilweise miteinander verbunden sind.

7. Vorform nach einem der vorangehenden Ansprüche, **dadurch gekennzeichnet, dass** die Seele (4) eine Übereinanderlagerung von Geweben umfasst, die durch Ineinanderschieben von Geweben (50) entsprechender Form übereinander angebracht sind.

8. Vorform nach einem der vorangehenden Ansprüche, **dadurch gekennzeichnet, dass** die Sohle (2) von zwei voneinander getrennten Teilen gebildet ist.

9. Vorform nach Anspruch 8, **dadurch gekennzeichnet, dass** sich die zwei Teile teilweise überlappen.

10. Vorform nach Anspruch 8, **dadurch gekennzeichnet, dass** die zwei Teile derart voneinander getrennt sind, dass sie einen Schlitz (12) definieren.

11. Vorform nach einem der vorangehenden Ansprüche, **dadurch gekennzeichnet, dass** sich die Seele (4) in der Konkavität der Vorform befindet.

12. Vorform nach einem der Ansprüche 1 bis 10, **dadurch gekennzeichnet, dass** sich die Seele (4) auf dem konvexen Teil der Vorform befindet.

13. Vorform nach einem der vorangehenden Ansprüche, **dadurch gekennzeichnet, dass** die Sohle (2) oder die Seele (4) oder beide ferner eine Übereinanderlagerung von durch Drapieren übereinander angebrachten Geweben umfasst.

14. Vorform nach Anspruch 13, **dadurch gekennzeichnet, dass** mindestens einige der Gewebeelemente und der Vorform durch Nähte verbunden sind.

15. Versteifung, **dadurch gekennzeichnet, dass** sie durch Imprägnieren mit Harz, dann Erhitzen, einer Vorform nach einem der vorangehenden Ansprüche erhalten ist.

16. Verfahren zur Herstellung einer Vorform nach einem der Ansprüche 1 bis 14, **dadurch gekennzeichnet, dass** diese Vorform durch Konturweben auf einer Wickelspindel (46) durchgeführt wird, aufweisend eine Vertiefung (44) oder eine Ausstülpung, die das Formweben der Seele (4) und der Sohle (2) erlaubt.

17. Herstellungsverfahren nach Anspruch 16, **dadurch gekennzeichnet, dass** die Seiten (8) der Vorform gespannt werden, um die Breite dieser etwa zylindrisch gewebten Vorform zu reduzieren, bei Vergrößerung des Wickeldurchmessers der Seele (4) und der Sohle (2).

18. Herstellungsverfahren nach einem der Ansprüche 16 oder 17 für die Herstellung einer Vorform nach Anspruch 10, **dadurch gekennzeichnet, dass** die Sohle (2) beim Verlassen des Webstuhls geschnitten wird, um den zentralen Schlitz (12) zu bilden.

19. Herstellungsverfahren nach einem der Ansprüche 16 oder 17 für die Herstellung einer Vorform nach Anspruch 8, **dadurch gekennzeichnet, dass** die Sohle (2) durch mindestens zwei zusätzliche seitliche, von den Schussfäden (28) der Seele (4) der Vorform getrennte Kettscharen (22), dann durch Entfalten dieser seitlichen Teile zum Zentrum der Vorform hergestellt wird.

20. Platte, insbesondere für Luftfahrzeuggondel, **dadurch gekennzeichnet, dass** sie durch mindestens eine Versteifung nach Anspruch 15 verstärkt ist.

## Claims

1. A preform woven by shaped weaving, having an omega section comprising a web (4) and a flange (2), at least one portion of said web (4) and at least one portion of said flange (2) comprising weft yarns (26, 28, 30) crossing on common warp yarns (20), **characterized in that** the weft yarns (26, 28, 30) of said web (4) form an angle different from 90° with at least one portion of the warp yarns (20, 24) of said web (4).

2. The preform according to claim 1, **characterized in that** the wefts (26) of the flange (2) link the warps (20) of the lateral portions of the flange to the warps (22) of the central portion of the flange (2) and **in that** the wefts of the web (28) link said warps (20) of the lateral portions of the flange (2) to the wraps (24) of the central portion of the web (4).

3. The preform according to claim 1, **characterized in that** certain wefts (30) of the flange (2) link a warps lap of the lateral portions of the flange (2) to the warps (24) of the central portion of the web (4), and **in that** other wefts (28) link another warps lap (20) from the lateral portions of the flange (2) to the warps (24) of the central portion of the web (4).

4. The preform according to claim 1, **characterized in that** certain wefts (26) of the flange (2) link at least one warps lap (20) of the lateral portions of the flange (2) to at least one warps lap (22) of the central portions of the flange (2), and **in that** other wefts (28, 30) link the warps laps of the flange (20, 22) to the warps (24) of the central portion of the web (4).

5. The preform according to any one of the preceding claims, **characterized in that** said web (4) comprises a superposition of fabrics whose warps laps are at least partially linked together.

6. The preform according to any one of the preceding claims, **characterized in that** said flange (2) comprises a superposition of fabrics whose warps laps (20, 22) are at least partially linked together.

7. The preform according to any one of the preceding claims, **characterized in that** said web (4) comprises a superposition of fabrics added to each other by interlocking fabrics (50) of corresponding shape.

8. The preform according to any one of the preceding claims, **characterized in that** said flange (2) is formed of two portions separated from each other.

9. The preform according to claim 8, **characterized in that** said two portions partially overlap.

10. The preform according to claim 8, **characterized in that** said two portions are separated from each other so as to define a slot (12).

11. The preform according to any one of the preceding claims, **characterized in that** said web (4) is located in the concavity of said preform.

12. The preform according to any one of claims 1 to 10, **characterized in that** said web (4) is located on the convex portion of said preform.

13. The preform according to any one of the preceding claims, **characterized in that** said flange (2) or said web (4), or both, further comprises a superposition of fabrics added to each other by draping.

14. The preform according to claim 13, **characterized in that** at least some of the fabric elements and the preform are linked by seams.

15. A stiffener, **characterized in that** it is obtained by impregnating resin, then baking, of a preform in accordance with any one of the preceding claims.

16. A method for manufacturing a preform in accordance with any one of claims 1 to 14, **characterized in that** this preform is produced by contour weaving on a winding mandrel (46) having a groove (44) or a protuberance allowing to shaped weave the web (4) and the flange (2) of the preform.

17. The manufacturing method according to claim 16, **characterized in that** the sides (8) of said preform are tightened in order to reduce the width of this substantially cylindrically woven preform, while increasing the winding diameter of said web (4) and said flange (2).

18. The manufacturing method according to any of claims 16 or 17 for the production of a preform in accordance with claim 10, **characterized in that** said flange (2) is cut at the output of the loom to form said central slot (12).

19. The manufacturing method according to any of claims 16 or 17 for the production of a preform in accordance with claim 8, **characterized in that** said flange (2) is produced by at least two laps of additional side warps (22) disconnected from the weft yarns (28) of the web (4) of the preform, then **in that** these lateral portions are unfolded towards the center of the preform.

20. A plate in particular for an aircraft nacelle, **characterized in that** it is reinforced by at least one stiffener in accordance with claim 15.
